# EUROPEAN PATENT SPECIFICATION

(11) **EP 4 325 694 B1**
(45) Date of publication and mention of the grant of the patent: **30.07.2025**
(21) Application number: 23190866.6
(22) Date of filing: 10.08.2023
(51) Int. Cl.: H02K 1/02, H02K 1/2796, H02K 1/32

(54) **ROTOR, DISC-TYPE MOTOR, MOTOR-DRIVEN SYSTEM, AND VEHICLE**
ROTOR, SCHEIBENMOTOR, MOTORBETRIEBENES SYSTEM UND FAHRZEUG
ROTOR, MOTEUR DE TYPE DISQUE, SYSTÈME MOTORISÉ ET VÉHICULE

(30) Priority: 12.08.2022 CN 202210969564
(43) Date of publication of application: 21.02.2024
(73) Proprietor: Huawei Digital Power Technologies Co., Ltd., Shenzhen, Guangdong 518043 (CN)
(72) Inventor: LIN, Run, Shenzhen 518043 (CN); HUANG, Changyao, Shenzhen 518043 (CN)
(74) Representative: Gill Jennings & Every LLP

(56) References cited:
- EP-B1- 2 975 731
- WO-A1-2021/241520
- CN-A- 113 437 850
- US-A1- 2011 148 224
- US-A1- 2017 047 795

## Description

### TECHNICAL FIELD

This application relates to the field of drive technologies, and in particular, to a rotor, a disc-type motor, a motor-driven system, and a vehicle.

### BACKGROUND

A disc-type motor is also referred to as an axial flux permanent magnet machine (axial flux permanent magnet machine, AFPMM). The disc-type motor has advantages such as a compact structure, high torque density, high efficiency, and high power density. The disc-type motor may be used in an electric vehicle, a renewable energy system, an energy storage system, an industrial device, and the like.

For a conventional surface-mounted disc-type motor structure, with an increase of an operating frequency of a rotor, eddy current loss of a conventional surface-mounted permanent magnet rotor structure significantly increases. This degrades performance of the motor. In addition, a reluctance torque component of the rotor is small, and power rapidly decreases at a high speed.

For a conventional built-in disc-type motor structure, during preparation of a disc-type motor, a silicon steel sheet is wound into an integrated ring rotor core, and then magnetic steel is embedded in the rotor core. However, when the silicon steel sheet is wound into the integrated ring rotor core, both an inner ring wall and an outer ring wall of the rotor core are in an Archimedes' involute shape instead of a circular shape. As a result, the inner ring wall and the outer ring wall of the rotor core cannot effectively fit with another mechanical part of a rotor of the motor, and a connection between the inner ring wall of the magnetic steel and a motor shaft is unreliable. This affects structural strength of the disc-type motor.

Document US 2011/148224 A1 discloses a rotor used for an axial gap permanent magnet motor in which a stator and the rotor are oppositely arranged having a gap between the stator and the rotor in a direction parallel to a rotary shaft, comprising: a plurality of permanent magnets that are magnetized in a rotary shaft direction respectively and arranged along a circumferential direction of the rotary shaft to form field magnetic poles; a plurality of soft magnetic material segments each of which is provided so as to cover at least a stator-facing surface in each of the permanent magnets to form a permanent magnet/soft magnetic material composite part including the permanent magnet and the soft magnetic material segment; and a disc-shaped non-magnetic moulded frame that is moulded so as to cover a periphery of the permanent magnet/soft magnetic material composite parts while leaving at least the stator-facing surfaces of the soft magnetic material segments as exposed surfaces, wherein the permanent magnet/soft magnetic material composite parts are integrated with the disc-shaped non-magnetic moulded frame by moulding of the disc-shaped non-magnetic moulded frame.

Document WO 2021/241520 A1 discloses a rotor for an axial flux motor comprising an iron core including a plurality of side surfaces thereof and a plurality of permanent magnets facing each of the plurality of side surfaces so as to open the facing surfaces and surround the iron core, and the plurality of permanent magnets are the iron cores.

### SUMMARY

Embodiments of this application provide a rotor, a disc-type motor, a motor-driven system, and a vehicle, to improve structural strength. All embodiments and aspects in the following paragraphs of the description (from §5 - §103) relate to the present invention.

According to a first aspect, an embodiment of this application provides a rotor, applied to a disc-type motor, and including: a fastening sleeve, including 2P accommodation grooves provided along a circumferential direction of the fastening sleeve, where P is an integer greater than or equal to 1; and a magnetic field concentration structure, including 2P composite magnetic field concentration components, where each composite magnetic field concentration component is fixedly accommodated in a corresponding accommodation groove, and the composite magnetic field concentration component includes a permanent magnet structure and a soft magnet structure that are embedded in each other.

The composite magnetic field concentration component includes the permanent magnet structure and the soft magnet structure that are embedded in each other, and the soft magnet structure can implement effective magnetic conduction. The magnetic field concentration structure can effectively reduce eddy current loss. This helps increase an output torque of the rotor and reduce torque fluctuation, so that performance of the rotor is improved.

The magnetic field concentration structure is obtained by splicing the 2P composite magnetic field concentration components along the circumferential direction of the fastening sleeve, but not an integrated structure obtained through winding. In this way, outer walls of the composite magnetic field concentration components can well fit with inner walls of the accommodation grooves. This improves stability of a connection between the magnetic field concentration structure and the fastening sleeve (or another mechanical part of the rotor, for example, a rotating shaft), so that strength of the rotor is improved.

The composite magnetic field concentration component can be considered as a part of an overall ring structure. During preparation of the magnetic field concentration structure, a silicon steel sheet does not need to be wound into an integrated ring structure, and an inner ring wall and an outer ring wall of the rotor do not need to be fine-processed to ensure coaxiality of the rotor. Therefore, difficulty in preparation and assembly of the magnetic field concentration structure is reduced.

The fastening sleeve is made of a non-magnetic-conducting and non-electrical-conducting material. The magnetic field concentration structure is fastened to the fastening sleeve. The fastening sleeve can reduce magnetic leakage of the rotor, so that the output torque of the rotor is increased.

According to the first aspect, the permanent magnet structure includes an intermediate axial permanent magnet unit and a side permanent magnet unit distributed on one side or two sides of the intermediate axial permanent magnet unit along an axial direction of the rotor. The intermediate axial permanent magnet unit and each side permanent magnet unit jointly form first accommodation space. The soft magnet structure is embedded in the first accommodation space.

A built-in permanent magnet structure is implemented by arranging permanent magnets in a magnetic field concentration manner, in combination with a special rotor core structure. Compared with a surface-mounted permanent magnet rotor, the motor achieves significant salience effects and has an advantage of generating a large reluctance torque, so that the output torque of the rotor is increased. Each pair of magnetic poles is obtained by splicing a plurality of pieces of soft magnetic materials and permanent magnetic materials, and a process is simple. The composite magnetic field concentration structure is obtained by combining permanent magnets with different shapes and magnetization manners, and a large saliency ratio is set. In a magnetic circuit, the soft magnetic materials, the permanent magnets, and a stator form a complete magnetic loop, so that main flux is increased, and magnetic leakage is reduced. This implements magnetic concentration, and improves air-gap flux density. In addition, a built-in permanent magnet structure is implemented, so that the motor achieves significant salience effects, flux-weakening performance is high, and a reluctance torque is large.

According to the first aspect, the side permanent magnet unit includes an inner permanent magnet element and two outer permanent magnet elements. Both the intermediate axial permanent magnet unit and the inner permanent magnet element are located between the two outer permanent magnet elements along a circumferential direction of the rotor. The inner permanent magnet element and the intermediate axial permanent magnet unit are disposed at a spacing along the axial direction of the rotor. The intermediate axial permanent magnet unit, the inner permanent magnet element, and the two outer permanent magnet elements jointly enclose the first accommodation space. The soft magnet structure includes a first soft magnet, and the first soft magnet is embedded in the first accommodation space. According to the first aspect, in a possible implementation, the inner permanent magnet element includes a side axial permanent magnet and two inner permanent magnets. The side axial permanent magnet is connected between the two inner permanent magnets along the circumferential direction of the rotor. A surface, backing the intermediate axial permanent magnet unit, of the side axial permanent magnet and the two inner permanent magnets jointly enclose second accommodation space. The soft magnet structure further includes a second soft magnet, and the second soft magnet is embedded in the second accommodation space.

According to the first aspect, in a possible implementation, the accommodation groove is a through groove that penetrates the fastening sleeve along the axial direction of the rotor, there are two side permanent magnet units, and the two side permanent magnet units are respectively located on two sides of the intermediate axial permanent magnet unit along the axial direction of the rotor.

According to the first aspect, in a possible implementation, the two side permanent magnet units located on the two sides of the intermediate axial permanent magnet unit are symmetrical with respect to the intermediate axial permanent magnet unit along the axial direction of the rotor. This helps improve stability of the output torque of the rotor.

According to the first aspect, in a possible implementation, the fastening sleeve further includes 2P interlayers. Each interlayer is located in the accommodation groove and is configured to divide the accommodation groove into a first accommodation sub-groove and a second accommodation sub-groove along the axial direction of the rotor. Each composite magnetic field concentration component includes a first magnetic part and a second magnetic part. The first magnetic part is fixedly accommodated in the first accommodation sub-groove, and the second magnetic part is fixedly accommodated in the second accommodation sub-groove. The first magnetic part and the second magnetic part each include a permanent magnet structure and a soft magnet structure that are embedded in each other. Along the axial direction of the rotor, the interlayer is located between an intermediate axial permanent magnet unit of the first magnetic part and an intermediate axial permanent magnet unit of the second magnetic part, a side permanent magnet unit of the first magnetic part is located on a side, backing the interlayer, of the intermediate axial permanent magnet unit of the first magnetic part, and a side permanent magnet unit of the second magnetic part is located on a side, backing the interlayer, of the intermediate axial permanent magnet unit of the second magnetic part. The interlayers are disposed. This helps improve overall strength of the fastening sleeve, and improve reliability of the rotor and the disc-type motor.

According to the first aspect, in a possible implementation, a structure of the first magnetic part and a structure of the second magnetic part are symmetrical with respect to the interlayer along the axial direction of the rotor. This helps improve stability of the output torque of the rotor.

According to the first aspect, in a possible implementation, the fastening sleeve includes an inner ring, an outer ring, and 2P ribs. The outer ring is sleeved on the inner ring. The 2P ribs are fastened between the inner ring and the outer ring. The 2P ribs are provided at spacings along the circumferential direction of the fastening sleeve. Every two adjacent ribs, the inner ring, and the outer ring jointly enclose the accommodation groove.

The fastening sleeve includes the inner ring, the outer ring, and the 2P ribs. This implements a simple structure of the fastening sleeve, and facilitates preparation of the fastening sleeve. According to the first aspect, in a possible implementation, each rib includes a positioning rod and a limiting rib that protrudes from a side surface of the positioning rod that faces the accommodation groove, and the limiting rib is configured to limit a position of the composite magnetic field concentration component.

The positioning rod is configured to limit a position when the composite magnetic field concentration component is assembled in a corresponding accommodation groove. This improves assembly convenience for assembling the composite magnetic field concentration component on the fastening sleeve, and improves assembly efficiency and assembly precision of the rotor. The limiting rib is configured to limit movement of the composite magnetic field concentration component along the axial direction of the rotor. This improves stability of positions of the composite magnetic field concentration component and the fastening sleeve, so that stability and reliability of the rotor are improved.

According to the first aspect, in a possible implementation, each composite magnetic field concentration component is provided with a limiting groove, and the limiting rib is accommodated in the limiting groove. The accommodation groove is a through groove that penetrates the fastening sleeve, so as to facilitate preparation of the fastening sleeve.

According to the first aspect, in a possible implementation, the fastening sleeve is further provided with a cooling channel for circulating a cooling medium.

Because the cooling medium can be circulated on the fastening sleeve, heat dissipation performance of the rotor is improved, so that reliability of the rotor is improved.

According to a second aspect, an embodiment of this application further provides a disc-type motor, including two stators, the rotor according to the first aspect, a rotating shaft, and a housing. The rotor is located between the two stators along an axial direction of the disc-type motor. The rotating shaft penetrates the two stators and the rotor. The rotating shaft is connected to the rotor to rotate along with the rotor. The housing is sleeved on the two stators, the rotor, and the rotating shaft.

The magnetic field concentration structure of the rotor is obtained by splicing the 2P composite magnetic field concentration components along the circumferential direction of the fastening sleeve, but not an integrated structure obtained through winding. In this way, outer walls of the composite magnetic field concentration components can well fit with inner walls of the accommodation grooves. This improves stability of a connection between the magnetic field concentration structure and the fastening sleeve (or another mechanical part of the rotor, for example, a rotating shaft), so that strength of the rotor is improved, and structural strength and stability of the disc-type motor are improved.

According to a third aspect, an embodiment of this application further provides a motor-driven system, including the disc-type motor according to the second aspect, a controller, and a battery. The controller is electrically connected to the disc-type motor, and the battery is electrically connected to the disc-type motor.

According to a fourth aspect, an embodiment of this application further provides a vehicle, including the motor-driven system according to the third aspect and a frame. The motor-driven system is mounted on the frame.

### BRIEF DESCRIPTION OF DRAWINGS

FIG. 1 is a schematic diagram of an application scenario of a vehicle according to an embodiment of this application;
FIG. 2a is a schematic three-dimensional diagram of a disc-type motor according to an embodiment of this application;
FIG. 2b is a schematic three-dimensional exploded view of the disc-type motor shown in FIG. 2a;
FIG. 2c is a schematic three-dimensional diagram of assembly of a rotor and a stator of a disc-type motor;
FIG. 3a is a schematic three-dimensional diagram of a partial structure of a distributed wound disc-type motor according to an embodiment of this application;
FIG. 3b is a side view of the disc-type motor shown in FIG. 3a;
FIG. 4 is a schematic three-dimensional diagram of assembly of a rotor according to an embodiment of this application;
FIG. 5a is a schematic three-dimensional diagram of a fastening sleeve of the rotor shown in FIG. 4;
FIG. 5b is a schematic enlarged view of a partial area of the fastening sleeve shown in FIG. 5a;
FIG. 6 is a schematic three-dimensional diagram of a magnetic field concentration structure according to an embodiment of this application;
FIG. 7 is a schematic three-dimensional diagram of a composite magnetic field concentration component according to an embodiment of this application;
FIG. 8 is a schematic three-dimensional diagram of a permanent magnet structure according to an embodiment of this application;
FIG. 9 is a schematic three-dimensional diagram of a soft magnet structure according to an embodiment of this application;
FIG. 10 is a schematic three-dimensional diagram of an intermediate axial permanent magnet unit and a side axial permanent magnet according to an embodiment of this application;
FIG. 11 is a schematic three-dimensional diagram of two composite magnetic field concentration components;
FIG. 12 is a side view of a composite magnetic field concentration component;
FIG. 13 is a diagram of magnetic circuits in magnetization directions of permanent magnet structures at one pair of magnetic poles;
FIG. 14a is a waveform diagram of air-gap flux density of a surface-mounted disc-type motor;
FIG. 14b is a waveform diagram of air-gap flux density of a disc-type motor according to an embodiment of this application;
FIG. 15a is a diagram of magnetic circuits in magnetization directions of permanent magnet structures at one pair of magnetic poles according to a possible implementation of this application;
FIG. 15b is a diagram of magnetic circuits in magnetization directions of permanent magnet structures at one pair of magnetic poles according to a possible implementation of this application;
FIG. 15c is a diagram of magnetic circuits in magnetization directions of permanent magnet structures at one pair of magnetic poles according to a possible implementation of this application;
FIG. 15d is a diagram of magnetic circuits in magnetization directions of permanent magnet structures at one pair of magnetic poles according to a possible implementation of this application;
FIG. 15e is a diagram of magnetic circuits in magnetization directions of permanent magnet structures at one pair of magnetic poles according to a possible implementation of this application;
FIG. 16 is a schematic three-dimensional diagram of a fastening sleeve according to an embodiment of this application; and
FIG. 17 is a schematic diagram of a permanent magnet structure of a composite magnetic field concentration component according to an embodiment of this application.

### DESCRIPTION OF EMBODIMENTS

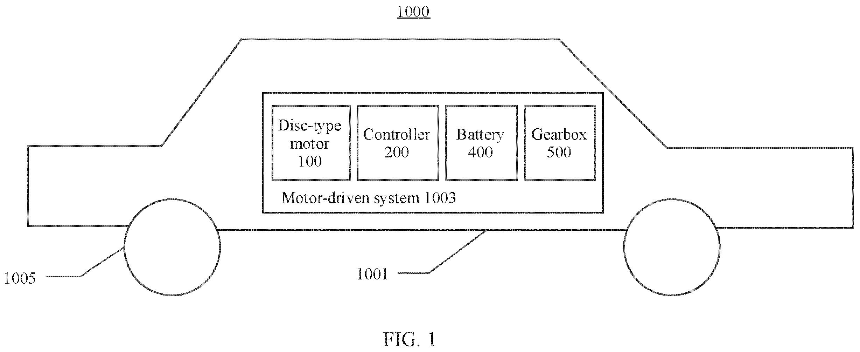

FIG. 1 is a schematic diagram of an application scenario of a vehicle 1000 according to an embodiment of this application. The vehicle 1000 may be one of an electric vehicle (Electric Vehicle, EV for short), a pure electric vehicle/battery electric vehicle (Pure Electric Vehicle/Battery Electric Vehicle, PEV/BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), and a new energy vehicle (New Energy Vehicle).

The vehicle 1000 includes a frame 1001 and a motor-driven system 1003. The motor-driven system 1003 is mounted on the frame 1001. As a structural framework of the vehicle 1000, the frame 1001 is configured to support, fasten, and connect various systems, and carry load inside the vehicle 1000 and load that comes from an external environment.

The motor-driven system 1003 is a system that includes a series of components and that is configured to produce a driving force and transfer the driving force to a road surface. As shown in FIG. 1, the motor-driven system 1003 may include a disc-type motor 100, a controller 200, and a battery 400. The controller 200 is electrically connected to the disc-type motor 100, and is configured to control operation of the disc-type motor 100. The battery 400 is electrically connected to the disc-type motor 100, and the battery 400 is configured to provide electric energy for the disc-type motor 100. The motor-driven system 1003 may further include a gearbox 500. The gearbox 500 is configured to connect to the disc-type motor 100, to adjust a speed of the vehicle 1000.

The vehicle 1000 further includes a wheel 1005 disposed on the frame 1001. A rotating shaft of the disc-type motor 100 is connected to the wheel 1005 through a transmission component. In this way, the rotating shaft of the disc-type motor 100 outputs a driving force, and the transmission component transfers the driving force to the wheel 1005, so that the wheel 1005 rotates. The wheel 1005 includes front wheels and rear wheels. In this embodiment of this application, the motor-driven system 1003 may include one or two disc-type motors 100. When there is one disc-type motor 100, the disc-type motor 100 is connected to two front wheels or two rear wheels through a transmission component. When there are two disc-type motors 100, one disc-type motor is connected to two front wheels through a transmission component, and the other disc-type motor is connected to two rear wheels through another transmission component.

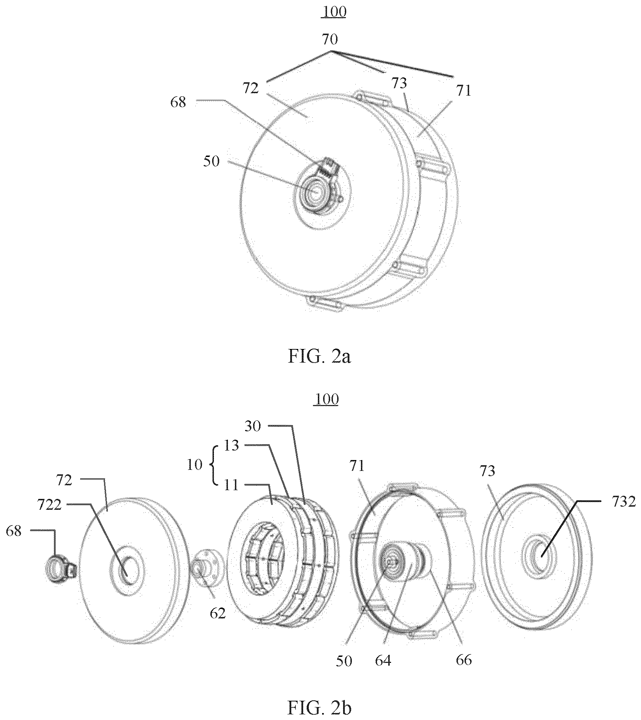

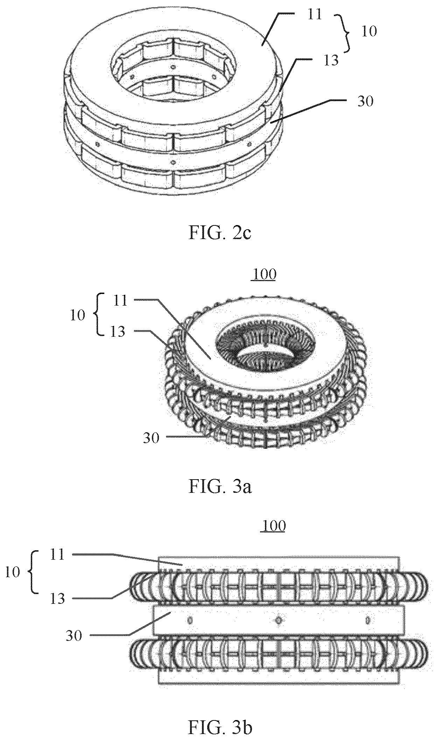

As shown in FIG. 2a, FIG. 2b, and FIG. 2c, an embodiment of this application provides a disc-type motor 100, including a stator 10, a rotor 30, a rotating shaft 50, and a housing 70. The stator 10 and the rotor 30 are arranged along an axial direction of the disc-type motor 100. The rotating shaft 50 penetrates the stator 10 and the rotor 30. The rotating shaft 50 is connected to the rotor 30 to rotate along with rotor 30. The housing 70 is sleeved on the stator 10, the rotor 30, and the rotating shaft 50 to protect the stator 10 and the rotor 30. The rotating shaft 50 rotatably penetrates the housing 70 and is connected to a wheel through a transmission component.

In some embodiments of this application, there are two stators 10 and one rotor 30, that is, the disc-type motor 100 has a dual-stator single-rotor structure. Because the disc-type motor 100 has the dual-stator single-rotor structure, compared with a single-stator single-rotor structure, an electromagnetic torque applied to the rotor 30 increases, so that overall torque density and power density of the disc-type motor 100 are improved. The rotor 30 is located between the two stators 10 along the axial direction of the disc-type motor 100. The stator 10 includes a stator body 11 and a winding 13 that surrounds the stator body 11. After the winding 13 is energized, a rotating magnetic field applied to the rotor 30 may be generated, so that the rotor 30 rotates relative to the stator 10. The winding 13 may be a concentrated winding.

The housing 70 includes a first housing 71, a second housing 72, and a third housing 73. The first housing 71 is sleeved on the stator 10 and the rotor 30. Along the axial direction of the disc-type motor 100, the second housing 72 is fastened to a first end of the first housing 71, the third housing 73 is fastened to a second end of the first housing 71, and the second housing 72 and the third housing 73 are disposed opposite to each other. The first housing 71, the second housing 72, and the third housing 73 jointly enclose accommodation space for accommodating the stator 10 and the rotor 30. One of the two stators 10 that is close to the second housing 72 is fastened to the second housing 72, and the other of the two stators 10 that is close to the third housing 73 is fastened to the third housing 73. Because the rotor 30 of the disc-type motor 100 is located between the two stators 10, the stator 10 may be directly fastened to the second housing 72 or the third housing 73. This facilitates assembly and disassembly of the rotor 30.

In some implementations of this application, the stator 10 may be fastened to the second housing 72 or the third housing 73 through clamping. It can be understood that a manner of fastening the stator 10 to the second housing 72 or the third housing 73 is not limited in this application.

The first housing 71, the second housing 72, and the third housing 73 are disposed separately. This facilitates assembly and maintenance of the disc-type motor 100. A first through hole 722 is provided on the second housing 72, and one end of the rotating shaft 50 penetrates the first through hole 722. A second through hole 732 is provided on the third housing 73, and the rotating shaft 50 penetrates the second through hole 732.

The disc-type motor 100 further includes a connector 62, a first bearing 64, a second bearing 66, and a position detector 68. The connector 62 is disposed on the second housing 72 and is located on a side of the second housing 72 that faces the third housing 73. The first bearing 64 is mounted on the connector 62, and one end of the rotating shaft 50 penetrates the first bearing 64, so that the rotating shaft 50 is rotatably connected to the second housing 72. The second bearing 66 is mounted on the third housing 73, and one end of the rotating shaft 50 penetrates the second bearing 66, so that the rotating shaft 50 is rotatably connected to the third housing 73. The position detector 68 is fastened to the second housing 72, and the rotating shaft 50 rotatably penetrates the position detector 68. The position detector 68 is configured to detect a position of the rotor 30.

In another embodiment of this application, as shown in FIG. 3a and FIG. 3b, the stator 10 includes a stator body 11 and a winding 13 that surrounds the stator body 11, where the winding 13 may alternatively be a distributed winding.

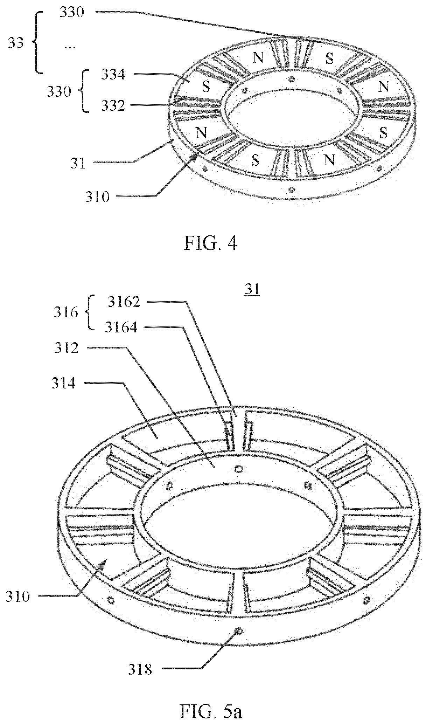

In some embodiments of this application, the rotor 30 is a built-in magnetized permanent magnet rotor. As shown in FIG. 4, FIG. 5a, and FIG. 6, the rotor 30 includes a fastening sleeve 31 and a magnetic field concentration structure 33 fastened to the fastening sleeve 31. The fastening sleeve 31 includes 2P accommodation grooves 310 provided along a circumferential direction of the fastening sleeve 31, where P is an integer greater than or equal to 1. The magnetic field concentration structure 33 includes 2P composite magnetic field concentration components 330. Each composite magnetic field concentration component 330 is fixedly accommodated in a corresponding accommodation groove 310. Each composite magnetic field concentration component 330 includes a permanent magnet structure 332 and a soft magnet structure 334 that are embedded in each other. The soft magnet structure 334 is made of a soft magnetic composite (soft magnetic composite, SMC) material, or the soft magnet structure 334 may be made of another magnetic conducting material. In this embodiment of this application, the soft magnet structure 334 is made of the SMC material, and the permanent magnet structure 332 is made of a magnetic steel material. Polarities of adjacent composite magnetic field concentration components 330 are different.

The accommodation groove 310 is roughly presented as fan-shaped space. In some implementations of this application, the accommodation groove 310 is a through groove that penetrates the fastening sleeve 31 along an axial direction of the rotor 30, to facilitate preparation of the fastening sleeve 31.

The composite magnetic field concentration component 330 is roughly in a fan-shaped structure, and the composite magnetic field concentration component 330 adapts to the accommodation groove 310. Each composite magnetic field concentration component 330 further includes an inner wall 3301 and an outer wall 3303 that are opposite to each other along a radial direction of the rotor 30. On a cross section perpendicular to the axial direction of the rotor 30, a contour of the inner wall 3301 is in an arc shape, and a contour of the outer wall 3303 is in an arc shape. Along the circumferential direction of the fastening sleeve 31, the 2P composite magnetic field concentration components 330 are spliced into the magnetic field concentration structure 33 in a ring structure. Inner walls 3301 of the 2P composite magnetic field concentration components 330 are spliced into an inner ring wall of the magnetic field concentration structure 33, and outer walls 3303 of the 2P composite magnetic field concentration components 330 are spliced into an outer ring wall of the magnetic field concentration structure 33.

In a conventional technology, during preparation of a disc-type motor, a silicon steel sheet is wound into an integrated ring rotor core, and then magnetic steel is embedded in the rotor core. However, when the silicon steel sheet is wound into the integrated ring rotor core, both an inner ring wall and an outer ring wall of the rotor core are in an Archimedes' involute shape instead of an arc shape. As a result, the inner ring wall and the outer ring wall of the rotor core further need to be fine-processed (for example, fine-ground) to ensure coaxiality of the rotor, so that the rotor core can fit with another mechanical part of the rotor (for example, a fastening sleeve of the rotor).

The magnetic field concentration structure 33 is obtained by splicing the 2P composite magnetic field concentration components 330 along the circumferential direction of the fastening sleeve 31, but not an integrated structure obtained through winding. In this way, the inner walls 3301 and the outer walls 3303 of the composite magnetic field concentration components 330 can well fit with side walls of the accommodation grooves 310. This improves stability of a connection between the magnetic field concentration structure 33 and the fastening sleeve 31 (or another mechanical part of the rotor, for example, the rotating shaft), so that strength of the rotor 30 is improved. A silicon steel sheet does not need to be wound into an integrated ring structure, and an inner ring wall and an outer ring wall of the rotor do not need to be fine-processed to ensure coaxiality of the rotor. Therefore, difficulty in preparation and assembly of the magnetic field concentration structure 33 is reduced.

The fastening sleeve 31 is made of a non-magnetic-conducting and non-electrical-conducting high-strength material. The magnetic field concentration structure 33 is fastened to the fastening sleeve 31. The fastening sleeve 31 can reduce magnetic leakage of the rotor 30, so that an output torque of the rotor 30 is increased.

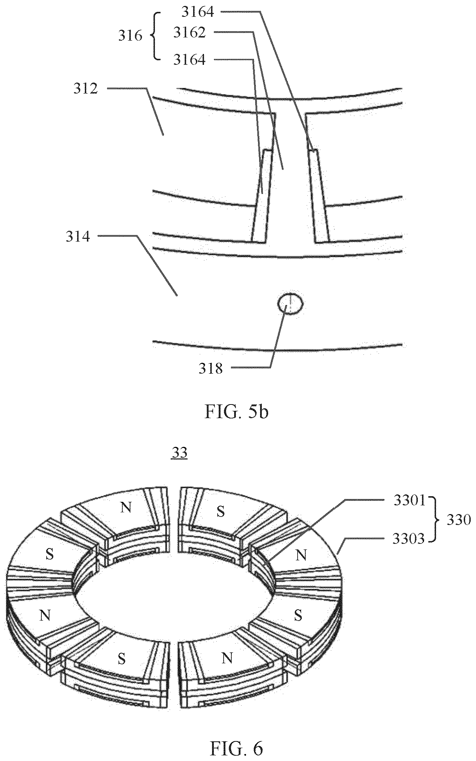

The fastening sleeve 31 is roughly in a ring shape. Refer to both FIG. 5a and FIG. 5b. The fastening sleeve 31 includes an inner ring 312, an outer ring 314, and 2P ribs 316. The inner ring 312 is configured to limit movement of the composite magnetic field concentration component 330 toward the inside of the fastening sleeve 31 along a radial direction of the fastening sleeve 31 (that is, movement in a direction from the outer ring 314 to the inner ring 312). The outer ring 314 is sleeved on the inner ring 312, and the outer ring 314 is configured to limit movement of the composite magnetic field concentration component 330 toward the outside of the fastening sleeve 31 along the radial direction of the fastening sleeve 31 (that is, movement in a direction from the inner ring 312 to the outer ring 314). The 2P ribs 316 are fastened between the inner ring 312 and the outer ring 314. The 2P ribs are provided at spacings along the circumferential direction of the fastening sleeve 31. Every two adjacent ribs 316, the inner ring 312, and the outer ring 314 jointly enclose an accommodation groove 310. In other words, the fastening sleeve 31 includes 2P accommodation grooves 310 provided along the circumferential direction of the fastening sleeve 31.

The rib 316 extends along the radial direction of the fastening sleeve 31. In this application, the radial direction is a diameter direction. Each rib 316 includes a positioning rod 3162 and a limiting rib 3164 that protrudes from a side surface of the positioning rod 3162 that faces the accommodation groove 310. The positioning rod 3162 is configured to limit a position when the composite magnetic field concentration component 330 is assembled in a corresponding accommodation groove 310. This improves assembly convenience for assembling the composite magnetic field concentration component 330 on the fastening sleeve 31, and also improves assembly efficiency and assembly precision of the rotor 30. The limiting rib 3164 is configured to limit movement of the composite magnetic field concentration component 330 along the axial direction of the rotor 30, to improve stability of positions of the composite magnetic field concentration component 330 and the fastening sleeve 31, so that stability and reliability of the rotor 30 are improved.

The fastening sleeve 31 is further provided with a cooling channel 318 for circulating a cooling medium (for example, cooling oil). In some implementations of this application, there are 2P cooling channels 318. One opening of the cooling channel 318 is located on a side, backing the inner ring 312, of the outer ring 314, and one opening of the cooling channel 318 is located on a side, backing the outer ring 314, of the inner ring 312. The cooling channel 318 extends along the positioning rod 3162, to transfer the cooling medium from the outer ring 314 to the side of the inner ring 312. In another implementation of this application, a quantity of cooling channels 318 is not limited. The cooling channel 318 is provided with a plurality of interconnected sub-channels. The sub-channels may be provided on the inner ring 312, the outer ring 314, and the rib 316. Because the cooling medium can be circulated on the fastening sleeve 31, heat dissipation performance of the rotor 30 is improved, so that reliability of the rotor 30 is improved.

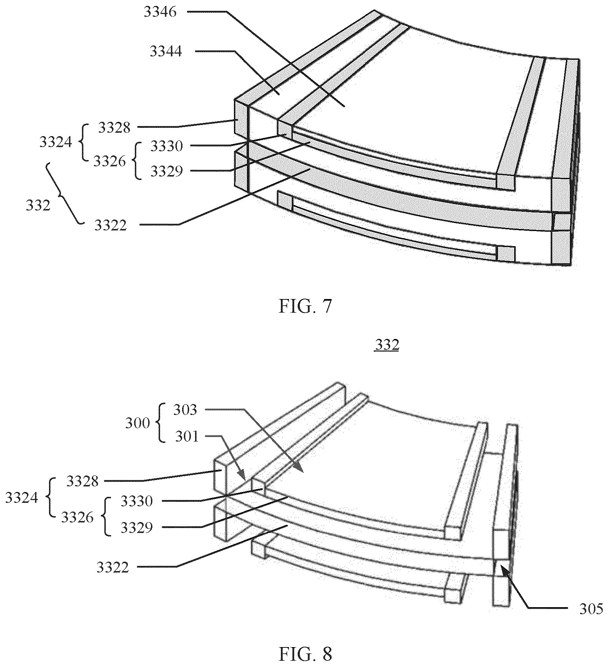

Each composite magnetic field concentration component 330 is fixedly accommodated in a corresponding accommodation groove 310. As shown in FIG. 7, FIG. 8, and FIG. 9, for ease of differentiation, the permanent magnet structure 332 in FIG. 7 is indicated by a gray area, and the permanent magnet structure 332 includes an intermediate axial permanent magnet unit 3322 and two side permanent magnet units 3324. Along the axial direction of the rotor 30, the intermediate axial permanent magnet unit 3322 is located between the two side permanent magnet units 3324. In some implementations of this application, the two side permanent magnet units 3324 located on two sides of the intermediate axial permanent magnet unit 3322 are symmetrical with respect to the intermediate axial permanent magnet unit 3322 along the axial direction of the rotor 30. This helps improve stability of the output torque of the rotor 30. In another implementation of this application, the two side permanent magnet units 3324 located on the two sides of the intermediate axial permanent magnet unit 3322 may not be symmetrical with respect to the intermediate axial permanent magnet unit 3322. The intermediate axial permanent magnet unit 3322 and each side permanent magnet unit 3324 jointly form accommodation space 300 for embedding the soft magnet structure 334.

Each side permanent magnet unit 3324 includes an inner permanent magnet element 3326 and two outer permanent magnet elements 3328. The accommodation space 300 includes first accommodation space 301 and second accommodation space 303.

Along the axial direction of the rotor 30, the inner permanent magnet element 3326 and the intermediate axial permanent magnet unit 3322 are disposed at a spacing. The outer permanent magnet element 3328 is perpendicular to the intermediate axial permanent magnet unit 3322. Along the axial direction of the rotor 30, the intermediate axial permanent magnet unit 3322 is located between inner permanent magnet elements 3326 of the two side permanent magnet units 3324. Along a circumferential direction of the rotor 30, both the intermediate axial permanent magnet unit 3322 and the inner permanent magnet element 3326 are located between the two outer permanent magnet elements 3328. The intermediate axial permanent magnet unit 3322, the inner permanent magnet element 3326, and the two outer permanent magnet elements 3328 jointly enclose the first accommodation space 301. The first accommodation space 301 is used to accommodate the soft magnet structure 334. In another implementation of this application, the outer permanent magnet element 3328 may not be perpendicular to the intermediate axial permanent magnet unit 3322.

Each inner permanent magnet element 3326 includes a side axial permanent magnet 3329 and two inner permanent magnets 3330. In each inner permanent magnet element 3326, the side axial permanent magnet 3329 is fastened between the two inner permanent magnets 3330 along the circumferential direction of the rotor 30. In other words, along the circumferential direction of the rotor 30, a first end of the side axial permanent magnet 3329 is fastened to one inner permanent magnet 3330, and a second end of the side axial permanent magnet 3329 is fastened to the other inner permanent magnet 3330. The side axial permanent magnet 3329 is perpendicular to the inner permanent magnet 3330. In some other implementations of this application, the side axial permanent magnet 3329 may not be perpendicular to the inner permanent magnet 3330.

A surface, backing the intermediate axial permanent magnet unit 3322, of the side axial permanent magnet 3329 and the two inner permanent magnets 3330 jointly enclose the second accommodation space 303. The second accommodation space 303 is used for embedding the soft magnet structure 334. In some implementations of this application, the inner permanent magnet 3330 is perpendicular to the side axial permanent magnet 3329. In some other implementations of this application, the inner permanent magnet 3330 may not be perpendicular to the side axial permanent magnet 3329.

In each composite magnetic field concentration component 330, along the circumferential direction of the rotor 30, outer permanent magnet elements 3328, located at a same end of an intermediate axial permanent magnet unit 3322, of two side permanent magnet units 3324 and the intermediate axial permanent magnet unit 3322 jointly enclose a limiting groove 305. The limiting rib 3164 is accommodated in the limiting groove 305, so that the composite magnetic field concentration component 330 cannot move along the axial direction of the rotor 30. This improves stability of the composite magnetic field concentration component 330 on the fastening sleeve 31.

The soft magnet structure 334 includes two first soft magnets 3344 and two second soft magnets 3346. Each first soft magnet 3344 is embedded in corresponding first accommodation space 301, and each second soft magnet 3346 is embedded in second accommodation space 303.

The intermediate axial permanent magnet unit 3322, the outer permanent magnet element 3328, the side axial permanent magnet 3329, the two inner permanent magnets 3330, the two first soft magnets 3344, and the two second soft magnets 3346 may all be directly molded through compression. Then the intermediate axial permanent magnet unit 3322, the outer permanent magnet element 3328, the side axial permanent magnet 3329, and the two inner permanent magnets 3330 constitute the composite magnetic field concentration component 330. This helps reduce difficulty in preparation and assembly of the composite magnetic field concentration component 330 and the rotor 30.

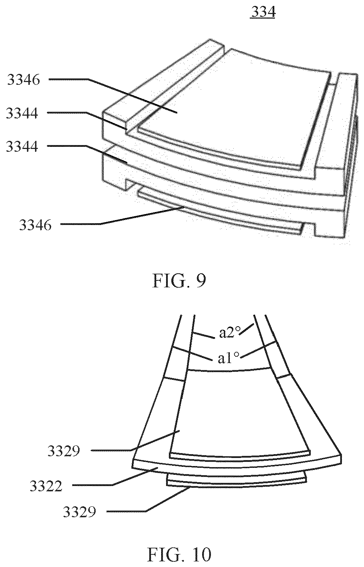

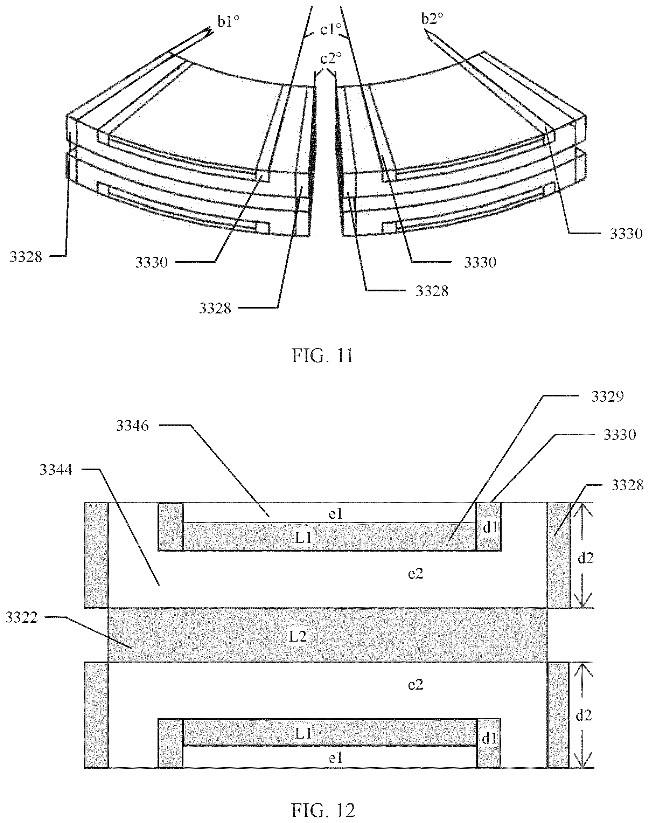

As shown in FIG. 10, it is assumed that a radian of the intermediate axial permanent magnet unit 3322 is a1° and a radian of the side axial permanent magnet 3329 is a2°. As shown in FIG. 11, a radian of the outer permanent magnet element 3328 is b1°, and a radian of the inner permanent magnet 3330 is b2°. In every two adjacent composite magnetic field concentration components 330, along the circumferential direction of the rotor 30, radians of two inner permanent magnets 3330 of every two adjacent composite magnetic field concentration components 330 is c1°, and a radian between an outer permanent magnet element 3328 on a first side of a first composite magnetic field concentration component 330 and an outer permanent magnet element 3328 on a second side of a second composite magnetic field concentration component 330 is c2°.

As shown in FIG. 12, a thickness of the side axial permanent magnet 3329 along the axial direction of the rotor 30 is L1, and a thickness of the intermediate axial permanent magnet unit 3322 along the axial direction of the rotor 30 is L2. A thickness of the inner permanent magnet 3330 along the axial direction of the rotor 30 is d1, and a thickness of the outer permanent magnet element 3328 along the axial direction of the rotor 30 is d2. A thickness of the second soft magnet 3346 located in the second accommodation space 303 along the axial direction of the rotor 30 is e1. A thickness of a part, located between the side axial permanent magnet 3329 and the intermediate axial permanent magnet unit 3322, of the first soft magnet 3344 along the axial direction of the rotor 30 is e2. The parameters a1°, a2°, b1°, b2°, c1°, c2°, L1, L2, e1, and e2 may be set according to a requirement. Because there are many optimizable parameters, the rotor 30 can be optimized to a great extent, and a design is more flexible. Value ranges of the parameters are determined, and results such as usage of permanent magnets, an output torque, and direct-axis and quadrature-axis inductances in various parameter combinations may be obtained.

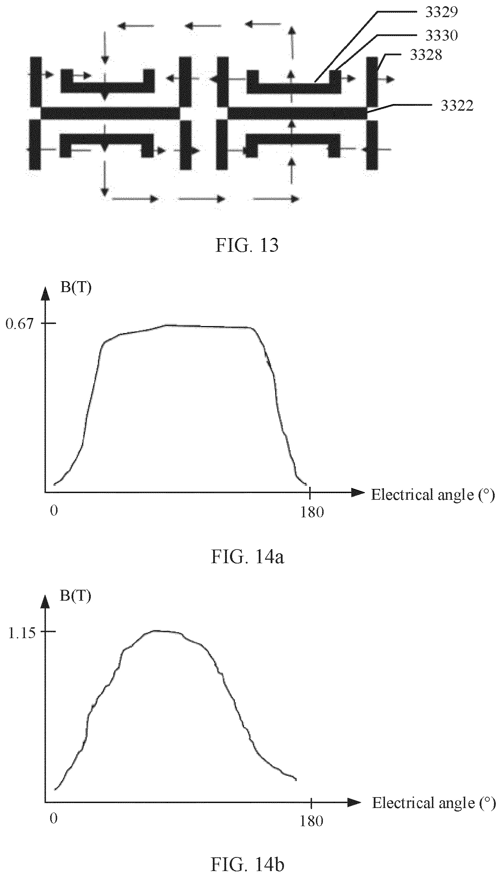

Every two adjacent composite magnetic field concentration components 330 constitute a pair of magnetic poles (namely, a complete magnetic loop N-S), where one composite magnetic field concentration component 330 is an N pole, the other composite magnetic field concentration component 330 is an S pole, and magnetization directions at a same pole are the same. FIG. 13 is a diagram of magnetic circuits in magnetization directions of permanent magnet structures at one pair of magnetic poles.

The rotor 30 is in a magnetic field concentration structure, and the side permanent magnet unit 3324 is further disposed on a side of the intermediate axial permanent magnet unit 3322, so that a waveform of air-gap flux density of the disc-type motor 100 is close to a sine wave, an output torque can be increased, and torque fluctuation can be reduced. A peak value of air-gap flux density of a surface-mounted disc-type motor with same specifications is approximately 0.69 T (as shown in FIG. 14a). In comparison, a peak value of air-gap flux density of the disc-type motor 100 provided in this implementation of this application can reach 1.15 T (as shown in FIG. 14b).

A quantity of axial permanent magnets (including the intermediate axial permanent magnet unit 3322 and the side axial permanent magnet 3329) is N (N is an odd number), and magnetization directions at a same pole are the same. Along the axial direction of the rotor 30, axial permanent magnets are symmetrically distributed along the limiting rib 3164 of the fastening sleeve 31. A soft magnetic composite material is provided between the axial permanent magnets, and an axial permanent magnet closer to the intermediate axial permanent magnet unit 3322 has a larger radian, that is, a(N - 1)/a1 > 1.

A quantity of soft magnets (including the first soft magnet 3344 and the second soft magnet 3346) is N± 1 (N is the quantity of axial permanent magnets), and the soft magnets are embedded between the axial permanent magnets.

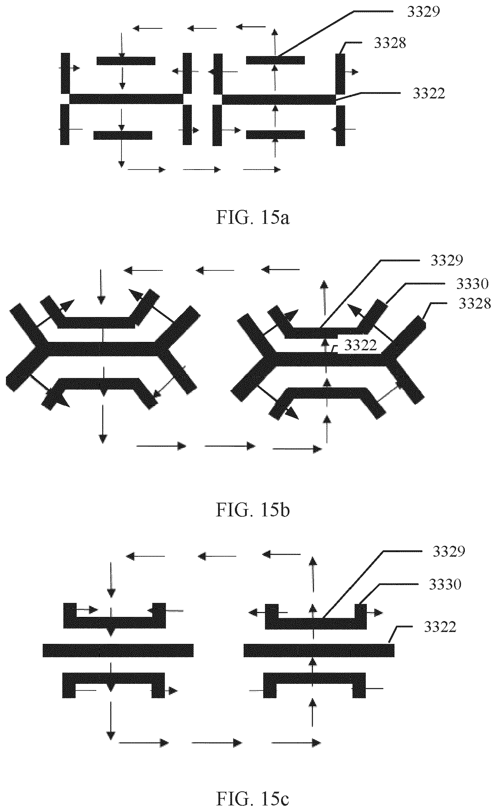

In another implementation of this application, as shown in FIG. 15a, the inner permanent magnet 3330 may be omitted, the intermediate axial permanent magnet unit 3322 is perpendicular to the outer permanent magnet element 3328, and the side axial permanent magnet 3329 is roughly parallel to the intermediate axial permanent magnet unit 3322.

In another implementation of this application, as shown in FIG. 15b, the outer permanent magnet element 3328 is not perpendicular to the intermediate axial permanent magnet unit 3322, and two outer permanent magnet elements 3328 at a same end of one intermediate axial permanent magnet unit 3322 are fastened to each other along the circumferential direction of the rotor. The limiting groove may be omitted. The inner permanent magnet 3330 and the side axial permanent magnet 3329 obliquely intersect with each other, and an obtuse angle is formed between the inner permanent magnet 3330 and the side axial permanent magnet 3329.

In another implementation of this application, as shown in FIG. 15c, the outer permanent magnet element 3328 may be omitted, the side axial permanent magnet 3329 is roughly perpendicular to the inner permanent magnet 3330, and the side axial permanent magnet 3329 is roughly parallel to the intermediate axial permanent magnet unit 3322.

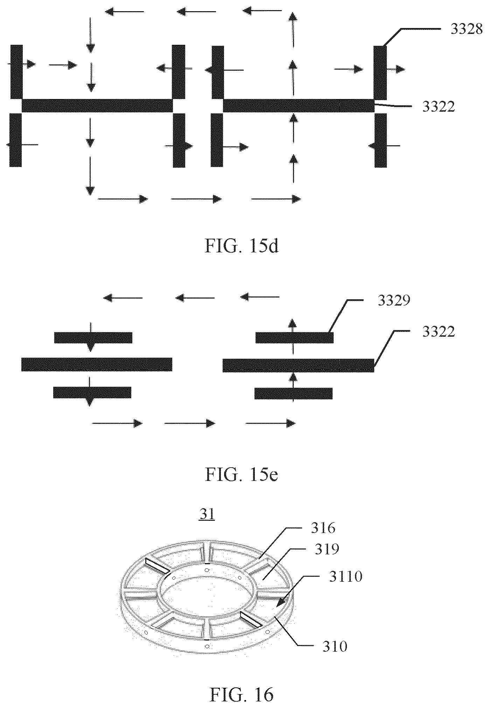

In another implementation of this application, as shown in FIG. 15d, the side permanent magnet unit 3324 may be omitted, and the outer permanent magnet element 3328 is roughly perpendicular to the intermediate axial permanent magnet unit 3322.

In another implementation of this application, as shown in FIG. 15e, both the outer permanent magnet element 3328 and the inner permanent magnet 3330 may be omitted, and the intermediate axial permanent magnet unit 3322 is located between the two side axial permanent magnets 3329 along the axial direction of the rotor.

In another implementation of this application, as shown in FIG. 16, the accommodation groove 310 is not a through groove that penetrates the fastening sleeve 31 along the axial direction of the rotor, the fastening sleeve 31 further includes 2P interlayers 319, each interlayer 319 is fastened to two adjacent ribs 316, and each interlayer 319 is accommodated in a corresponding accommodation groove 310 to divide the accommodation groove 310 into a first accommodation sub-groove 3110 and a second accommodation sub-groove (not shown in the figure) along the axial direction of the rotor. It should be noted that the first accommodation sub-groove 3110 and the second accommodation sub-groove are respectively formed on two sides of the interlayer 319 along the axial direction of the rotor.

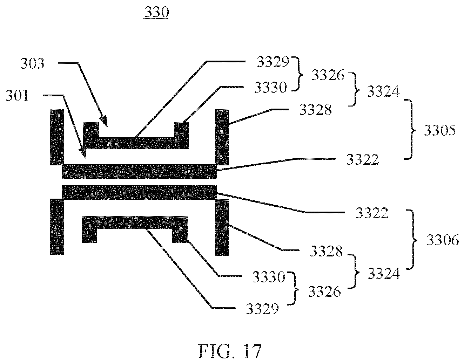

With reference to FIG. 17, each composite magnetic field concentration component 330 includes a first magnetic part 3305 and a second magnetic part 3306, the first magnetic part 3305 is fixedly accommodated in the first accommodation sub-groove 3110, the second magnetic part 3306 is fixedly accommodated in the second accommodation sub-groove, and the first magnetic part and the second magnetic part each include a permanent magnet structure and a soft magnet structure that are embedded in each other. The permanent magnet structure includes an intermediate axial permanent magnet unit 3322 and a side permanent magnet unit 3324. The intermediate axial permanent magnet unit 3322 and the side permanent magnet unit 3324 are arranged along the axial direction of the rotor. The interlayer 319 is located between an intermediate axial permanent magnet unit 3322 of the first magnetic part 3305 and an intermediate axial permanent magnet unit 3322 of the second magnetic part 3306. Along the axial direction of the rotor, a side permanent magnet unit 3324 of the first magnetic part 3305 is located on a side, backing the interlayer 319, of the intermediate axial permanent magnet unit 3322 of the first magnetic part 3305, and a side permanent magnet unit 3324 of the second magnetic part 3306 is located on a side, backing the interlayer 319, of the intermediate axial permanent magnet unit 3322 of the second magnetic part 3306. A structure of the first magnetic part 3305 and a structure of the second magnetic part 3306 are symmetrical with respect to the interlayer 319 along the axial direction of the rotor 30. This helps improve stability of the output torque of the rotor. In another implementation of this application, a structure of the first magnetic part 3305 and a structure of the second magnetic part 3306 may not be symmetric with respect to the interlayer 319. The intermediate axial permanent magnet unit 3322 and the side permanent magnet unit 3324 jointly form first accommodation space 301 for embedding a part of the soft magnet structure.

The side permanent magnet unit 3324 further includes an inner permanent magnet element 3326 and two outer permanent magnet elements 3328. A surface, backing the intermediate axial permanent magnet unit 3322, of the side axial permanent magnet 3329 and the two inner permanent magnets 3330 jointly enclose second accommodation space 303 for embedding a part of the soft magnet structure.

In the foregoing embodiments, two layers are equivalently obtained through division along an axial direction of the fastening sleeve 31, and each layer includes 2P accommodation sub-grooves. A magnetic part including a permanent magnet structure and a soft magnet structure may be fastened in the accommodation sub-groove through bonding, and then integral potting is performed. The fastening sleeve 31 further includes 2P interlayers 319. This can improve overall strength of the fastening sleeve 31, and improve reliability of the rotor and the disc-type motor.

It can be understood that structures of the permanent magnet structure and the soft magnet structure are not limited in this application, provided that the permanent magnet structure and the soft magnet structure are embedded in each other.

In this application, a built-in permanent magnet structure is implemented by arranging permanent magnets in a magnetic field concentration manner, in combination with a special rotor core structure. Compared with a surface-mounted permanent magnet rotor, the motor achieves significant salience effects and has an advantage of generating a large reluctance torque, so that the output torque of the rotor is increased. Each pair of magnetic poles is obtained by splicing a plurality of pieces of soft magnetic materials and permanent magnetic materials, and a process is simple. The composite magnetic field concentration structure is obtained by combining permanent magnets with different shapes and magnetization manners, and a large saliency ratio is set. In a magnetic circuit, the soft magnetic materials, the permanent magnets, and a stator form a complete magnetic loop, so that main flux is increased, and magnetic leakage is reduced. This implements magnetic concentration, and improves air-gap flux density. In addition, a built-in permanent magnet structure is implemented, so that the motor achieves significant salience effects, flux-weakening performance is high, and a reluctance torque is large.

It should be understood that expressions such as "include" and "may include" used in this application may indicate existence of a disclosed function, operation, or constituent element, but not limit one or more additional functions, operations, or constituent elements. In this application, terms such as "include" and/or "have" may be construed as indicating a particular feature, quantity, operation, constituent element, or component, or a combination thereof, but shall not be construed as excluding existence or possible addition of one or more other features, quantities, operations, constituent elements, or components, or combinations thereof.

In addition, in this application, the expression "and/or" includes any and all combinations of terms listed in association. For example, the expression "A and/or B" may include A, may include B, or may include both A and B.

In this application, an expression including ordinal numbers such as "first" and "second" may modify elements. However, the elements are not limited by the expression. For example, the expression does not limit an order and/or importance of the elements. The expression is merely intended to distinguish one element from another element. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component is described as being "connected to" another component, it should be understood that the component may be directly connected to the another component, or there may be another component between the component and the another component. In addition, when a component is described as being "directly connected to" another component, it should be understood that there is no component between the component and the another component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rotor (30) for an axial flux permanent magnet machine (100), the rotor comprising:
a fastening sleeve (31), comprising 2P accommodation grooves provided along a circumferential direction of the fastening sleeve, wherein P is an integer greater than or equal to 1; and
a magnetic field concentration structure (33), comprising 2P composite magnetic field concentration components, wherein each composite magnetic field concentration component is fixedly accommodated in a corresponding accommodation groove (310), and the composite magnetic field concentration component comprises a permanent magnet structure (332) and a soft magnet structure (334) that are embedded in each other, wherein the permanent magnet structure comprises an intermediate axial permanent magnet unit (3322) and a side permanent magnet unit (3324) distributed on one side or two sides of the intermediate axial permanent magnet unit along an axial direction of the rotor; and
the intermediate axial permanent magnet unit and the side permanent magnet unit jointly form a first accommodation space (301), and the soft magnet structure is embedded in the first accommodation space,
**characterized in that**
the side permanent magnet unit comprises an inner permanent magnet element (3326) and two outer permanent magnet elements (3328);
both the intermediate axial permanent magnet unit and the inner permanent magnet element are located between the two outer permanent magnet elements along a circumferential direction of the rotor, and the inner permanent magnet element and the intermediate axial permanent magnet unit are disposed at a spacing along the axial direction of the rotor; and
the intermediate axial permanent magnet unit, the inner permanent magnet element, and the two outer permanent magnet elements jointly enclose the first accommodation space, the soft magnet structure comprises a first soft magnet (3344), and the first soft magnet is embedded in the first accommodation space.

2. The rotor according to claim 1, wherein the inner permanent magnet element comprises a side axial permanent magnet (3329) and two inner permanent magnets (330), the side axial permanent magnet is connected between the two inner permanent magnets along the circumferential direction of the rotor, and a surface, backing the intermediate axial permanent magnet unit, of the side axial permanent magnet and the two inner permanent magnets jointly enclose second accommodation space; and
the soft magnet structure comprises a second soft magnet (3346), and the second soft magnet is embedded in the second accommodation space.

3. The rotor according to any one of claims 1 and 2, wherein the accommodation groove is a through groove that penetrates the fastening sleeve along the axial direction of the rotor, there are two side permanent magnet units, and the two side permanent magnet units are respectively located on two sides of the intermediate axial permanent magnet unit along the axial direction of the rotor.

4. The rotor according to claim 3, wherein the two side permanent magnet units located on the two sides of the intermediate axial permanent magnet unit are symmetrical with respect to the intermediate axial permanent magnet unit along the axial direction of the rotor.

5. The rotor according to any one of claims 1 and 2, wherein the fastening sleeve comprises 2P interlayers (319), and each interlayer is located in the accommodation groove and is configured to divide the accommodation groove into a first accommodation sub-groove (3110) and a second accommodation sub-groove along the axial direction of the rotor;
each composite magnetic field concentration component comprises a first magnetic part (3305) and a second magnetic part (3306), the first magnetic part is fixedly accommodated in the first accommodation sub-groove, the second magnetic part is fixedly accommodated in the second accommodation sub-groove, and the first magnetic part and the second magnetic part each comprise a permanent magnet structure and a soft magnet structure that are embedded in each other; and
along the axial direction of the rotor, the interlayer is located between an intermediate axial permanent magnet unit (3322) of the first magnetic part and an intermediate axial permanent magnet unit of the second magnetic part, a side permanent magnet unit of the first magnetic part is located on a side, backing the interlayer, of the intermediate axial permanent magnet unit of the first magnetic part, and a side permanent magnet unit of the second magnetic part is located on a side, backing the interlayer, of the intermediate axial permanent magnet unit of the second magnetic part.

6. The rotor according to claim 5, wherein a structure of the first magnetic part and a structure of the second magnetic part are symmetrical with respect to the interlayer along the axial direction of the rotor.

7. The rotor according to any one of claims 1 to 6, wherein the fastening sleeve comprises an inner ring, an outer ring, and 2P ribs, the outer ring is sleeved on the inner ring, the 2P ribs are fastened between the inner ring and the outer ring, the 2P ribs are provided at spacings along the circumferential direction of the fastening sleeve, and every two adjacent ribs, the inner ring, and the outer ring jointly enclose the accommodation groove.

8. The rotor according to claim 7, wherein each rib comprises a positioning rod (3162) and a limiting rib (3164) that protrudes from a side surface of the positioning rod that faces the accommodation groove, and the limiting rib is configured to limit a position of the composite magnetic field concentration component.

9. The rotor according to claim 8, wherein each composite magnetic field concentration component is provided with a limiting groove, and the limiting rib is accommodated in the limiting groove.

10. The rotor according to any one of claims 1 to 9, wherein the fastening sleeve is provided with a cooling channel (318) for circulating a cooling medium.

11. A disc-type motor (100), comprising two stators (10), the rotor according to any one of claims 1 to 10, a rotating shaft (50), and a housing (70), wherein the rotor is located between the two stators along an axial direction of the disc-type motor, the rotating shaft penetrates the two stators and the rotor, the rotating shaft is connected to the rotor to rotate along with the rotor, and the housing is sleeved on the two stators, the rotor, and the rotating shaft.

12. A motor-driven system (1003), comprising the disc-type motor according to claim 11, a controller, and a battery (400), wherein the controller is electrically connected to the disc-type motor, and the battery is electrically connected to the disc-type motor.

13. A vehicle (1000), comprising the motor-driven system according to claim 12 and a frame, wherein the motor-driven system is mounted on the frame.

## Patentansprüche

1. Rotor (30) für eine Axialfluss-Permanentmagnetmaschine (100), wobei der Rotor Folgendes umfasst:
eine Befestigungshülse (31), die 2P Aufnahmenuten umfasst, die entlang einer Umfangsrichtung der Befestigungshülse bereitgestellt sind, wobei P eine Ganzzahl größer oder gleich 1 ist; und
eine Magnetfeldkonzentrationsstruktur (33), die 2P Verbundmagnetfeldkonzentrationskomponenten umfasst, wobei jede Verbundmagnetfeldkonzentrationskomponente fest in einer entsprechenden Aufnahmenut (310) aufgenommen ist und die Verbundmagnetfeldkonzentrationskomponente eine Permanentmagnetstruktur (332) und eine Weichmagnetstruktur (334) umfasst, die ineinander eingebettet sind, wobei die Permanentmagnetstruktur eine axiale Zwischenpermanentmagneteinheit (3322) und eine seitliche Permanentmagneteinheit (3324) umfasst, die auf einer Seite oder zwei Seiten der axialen Zwischenpermanentmagneteinheit entlang einer axialen Richtung des Rotors verteilt sind; und
die axiale Zwischenpermanentmagneteinheit und die seitliche Permanentmagneteinheit gemeinsam einen ersten Aufnahmeraum (301) bilden und die Weichmagnetstruktur in dem ersten Aufnahmeraum eingebettet ist, **dadurch gekennzeichnet, dass** die seitliche Permanentmagneteinheit ein inneres Permanentmagnetelement (3326) und zwei äußere Permanentmagnetelemente (3328) umfasst;
sowohl die axiale Zwischenpermanentmagneteinheit als auch das innere Permanentmagnetelement sich zwischen den zwei äußeren Permanentmagnetelementen entlang einer Umfangsrichtung des Rotors befinden und das innere Permanentmagnetelement und die axiale Zwischenpermanentmagneteinheit in einem Abstand entlang der axialen Richtung des Rotors angeordnet sind; und
die axiale Zwischenpermanentmagneteinheit, das innere Permanentmagnetelement und die zwei äußeren Permanentmagnetelemente gemeinsam den ersten Aufnahmeraum umschließen, die Weichmagnetstruktur einen ersten Weichmagneten (3344) umfasst und der erste Weichmagnet in den ersten Aufnahmeraum eingebettet ist.

2. Rotor nach Anspruch 1, wobei das innere Permanentmagnetelement einen seitlichen axialen Permanentmagneten (3329) und zwei innere Permanentmagnete (330) umfasst, wobei der seitliche axiale Permanentmagnet zwischen den zwei inneren Permanentmagneten entlang der Umfangsrichtung des Rotors verbunden ist und eine Oberfläche, die die axiale Zwischenpermanentmagneteinheit stützt, des seitlichen axialen Permanentmagneten und der zwei inneren Permanentmagnete gemeinsam einen zweiten Aufnahmeraum umschließen; und
die Weichmagnetstruktur einen zweiten Weichmagneten (3346) umfasst und der zweite Weichmagnet in den zweiten Aufnahmeraum eingebettet ist.

3. Rotor nach einem der Ansprüche 1 und 2, wobei die Aufnahmenut eine durchgehende Nut ist, die die Befestigungshülse entlang der axialen Richtung des Rotors durchdringt, es zwei seitliche Permanentmagneteinheiten gibt und die zwei seitlichen Permanentmagneteinheiten sich jeweils auf zwei Seiten der axialen Zwischenpermanentmagneteinheit entlang der axialen Richtung des Rotors befinden.

4. Rotor nach Anspruch 3, wobei die zwei seitlichen Permanentmagneteinheiten, die sich auf den zwei Seiten der axialen Zwischenpermanentmagneteinheit befinden, in Bezug auf die axiale Zwischenpermanentmagneteinheit entlang der axialen Richtung des Rotors symmetrisch sind.

5. Rotor nach einem der Ansprüche 1 und 2, wobei die Befestigungshülse 2P Zwischenschichten (319) umfasst und jede Zwischenschicht sich in der Aufnahmenut befindet und dazu konfiguriert ist, die Aufnahmenut entlang der axialen Richtung des Rotors in eine erste Aufnahmeteilnut (3110) und eine zweite Aufnahmeteilnut zu unterteilen;
jede Verbundmagnetfeldkonzentrationskomponente einen ersten magnetischen Teil (3305) und einen zweiten magnetischen Teil (3306) umfasst, wobei der erste magnetische Teil fest in der ersten Aufnahmeteilnut aufgenommen ist, der zweite magnetische Teil fest in der zweiten Aufnahmeteilnut aufgenommen ist und der erste magnetische Teil und der zweite magnetische Teil jeweils eine Permanentmagnetstruktur und eine Weichmagnetstruktur umfassen, die ineinander eingebettet sind; und
entlang der axialen Richtung des Rotors sich die Zwischenschicht zwischen einer axialen Zwischenpermanentmagneteinheit (3322) des ersten magnetischen Teils und einer axialen Zwischenpermanentmagneteinheit des zweiten magnetischen Teils befindet, eine seitliche Permanentmagneteinheit des ersten magnetischen Teils sich auf einer die Zwischenschicht stützenden Seite der axialen Zwischenpermanentmagneteinheit des ersten magnetischen Teils befindet und eine seitliche Permanentmagneteinheit des zweiten magnetischen Teils sich auf einer die Zwischenschicht stützenden Seite der axialen Zwischenpermanentmagneteinheit des zweiten magnetischen Teils befindet.

6. Rotor nach Anspruch 5, wobei eine Struktur des ersten magnetischen Teils und eine Struktur des zweiten magnetischen Teils in Bezug auf die Zwischenschicht entlang der axialen Richtung des Rotors symmetrisch sind.

7. Rotor nach einem der Ansprüche 1 bis 6, wobei die Befestigungshülse einen Innenring, einen Außenring und 2P Rippen umfasst, der Außenring auf den Innenring aufgesteckt ist, die 2P Rippen zwischen dem Innenring und dem Außenring befestigt sind, die 2P Rippen in Abständen entlang der Umfangsrichtung der Befestigungshülse bereitgestellt sind und jeweils zwei benachbarte Rippen, der Innenring und der Außenring gemeinsam die Aufnahmenut umschließen.

8. Rotor nach Anspruch 7, wobei jede Rippe einen Positionierungsstab (3162) und eine Begrenzungsrippe (3164) umfasst, die von einer seitlichen Oberfläche des Positionierungsstabs vorsteht, die der Aufnahmenut zugewandt ist, und die Begrenzungsrippe dazu konfiguriert ist, eine Position der Verbundmagnetfeldkonzentrationskomponente zu begrenzen.

9. Rotor nach Anspruch 8, wobei jede Verbundmagnetfeldkonzentrationskomponente mit einer Begrenzungsnut versehen ist und die Begrenzungsrippe in der Begrenzungsnut aufgenommen ist.

10. Rotor nach einem der Ansprüche 1 bis 9, wobei die Befestigungshülse mit einem Kühlkanal (318) zum Zirkulierenlassen eines Kühlmediums versehen ist.

11. Scheibenmotor (100), umfassend zwei Statoren (10), den Rotor nach einem der Ansprüche 1 bis 10, eine rotierende Welle (50) und ein Gehäuse (70), wobei der Rotor sich entlang einer axialen Richtung des Scheibenmotors zwischen den zwei Statoren befindet, die rotierende Welle die zwei Statoren und den Rotor durchdringt, die rotierende Welle mit dem Rotor verbunden ist, um zusammen mit dem Rotor zu rotieren, und das Gehäuse auf die zwei Statoren, den Rotor und die rotierende Welle aufgesteckt ist.

12. Motorbetriebenes System (1003), umfassend den Scheibenmotor nach Anspruch 11, eine Steuerung und eine Batterie (400), wobei die Steuerung elektrisch mit dem Scheibenmotor verbunden ist und die Batterie elektrisch mit dem Scheibenmotor verbunden ist.

13. Fahrzeug (1000), umfassend das motorbetriebene System nach Anspruch 12 und einen Rahmen, wobei das motorbetriebene System auf dem Rahmen montiert ist.

## Revendications

1. Rotor (30) pour une machine à aimant permanent à flux axial (100), le rotor comprenant :
un manchon de fixation (31), comprenant 2P rainures de réception prévues le long d'une direction circonférentielle du manchon de fixation, dans lequel P est un entier supérieur ou égal à 1 ; et
une structure de concentration de champ magnétique (33), comprenant 2P composants composites de concentration de champ magnétique, dans lequel chaque composant composite de concentration de champ magnétique est logé de manière fixe dans une rainure de réception correspondante (310), et le composant composite de concentration de champ magnétique comprend une structure d'aimant permanent (332) et une structure d'aimant doux (334) encastrées l'une dans l'autre, dans lequel la structure d'aimant permanent comprend une unité d'aimant permanent axial intermédiaire (3322) et une unité d'aimant permanent latéral (3324) réparties sur un côté ou deux côtés de l'unité d'aimant permanent axial intermédiaire le long d'une direction axiale du rotor ; et
l'unité d'aimant permanent axial intermédiaire et l'unité d'aimant permanent latéral forment conjointement un premier espace de réception (301), et la structure d'aimant doux est intégrée dans le premier espace de réception, **caractérisé en ce que**
l'unité d'aimant permanent latéral comprend un élément d'aimant permanent interne (3326) et deux éléments d'aimant permanent externes (3328) ;
l'unité d'aimant permanent axial intermédiaire et l'élément d'aimant permanent interne sont situés entre les deux éléments d'aimant permanent externes le long d'une direction circonférentielle du rotor, et l'élément d'aimant permanent interne et l'unité d'aimant permanent axial intermédiaire sont disposés à un espacement le long de la direction axiale du rotor ; et
l'unité d'aimant permanent axial intermédiaire, l'élément d'aimant permanent interne, et les deux éléments d'aimant permanent externes entourent conjointement le premier espace de réception, la structure d'aimant doux comprend un premier aimant doux (3344), et le premier aimant doux est intégré dans le premier espace de réception.

2. Rotor selon la revendication 1, dans lequel l'élément d'aimant permanent interne comprend un aimant permanent axial latéral (3329) et deux aimants permanents internes (330), l'aimant permanent axial latéral est connecté entre les deux aimants permanents internes le long de la direction circonférentielle du rotor, et une surface, supportant l'unité d'aimant permanent axial intermédiaire, de l'aimant permanent axial latéral et les deux aimants permanents internes entourent conjointement un second espace de réception ; et
la structure d'aimant doux comprend un second aimant doux (3346), et le second aimant doux est intégré dans le second espace de réception.

3. Rotor selon l'une quelconque des revendications 1 et 2, dans lequel la rainure de réception est une rainure traversante qui pénètre dans le manchon de fixation le long de la direction axiale du rotor, il y a deux unités d'aimant permanent latérales, et les deux unités d'aimant permanent latérales sont respectivement situées sur deux côtés de l'unité d'aimant permanent axial intermédiaire le long de la direction axiale du rotor.

4. Rotor selon la revendication 3, dans lequel les deux unités d'aimant permanent latérales situées sur les deux côtés de l'unité d'aimant permanent axial intermédiaire sont symétriques par rapport à l'unité d'aimant permanent axial intermédiaire le long de la direction axiale du rotor.

5. Rotor selon l'une quelconque des revendications 1 et 2, dans lequel le manchon de fixation comprend 2P couches intermédiaires (319), et chaque couche intermédiaire est située dans la rainure de réception et est configurée pour diviser la rainure de réception en une première sous-rainure de réception (3110) et une seconde sous-rainure de réception le long de la direction axiale du rotor ;
chaque composant composite de concentration de champ magnétique comprend une première partie magnétique (3305) et une seconde partie magnétique (3306), la première partie magnétique est logée de manière fixe dans la première sous-rainure de réception, la seconde partie magnétique est logée de manière fixe dans la seconde sous-rainure de réception, et la première partie magnétique et la seconde partie magnétique comprennent chacune une structure d'aimant permanent et une structure d'aimant doux qui sont intégrées l'une dans l'autre ; et
le long de la direction axiale du rotor, la couche intermédiaire est située entre une unité d'aimant permanent axial intermédiaire (3322) de la première partie magnétique et une unité d'aimant permanent axial intermédiaire de la seconde partie magnétique, une unité d'aimant permanent latéral de la première partie magnétique est située sur un côté, supportant la couche intermédiaire, de l'unité d'aimant permanent axial intermédiaire de la première partie magnétique, et une unité d'aimant permanent latéral de la seconde partie magnétique est située sur un côté, supportant la couche intermédiaire, de l'unité d'aimant permanent axial intermédiaire de la seconde partie magnétique.

6. Rotor selon la revendication 5, dans lequel une structure de la première partie magnétique et une structure de la seconde partie magnétique sont symétriques par rapport à la couche intermédiaire le long de la direction axiale du rotor.

7. Rotor selon l'une quelconque des revendications 1 à 6, dans lequel le manchon de fixation comprend une bague intérieure, une bague extérieure, et des 2P nervures, la bague extérieure est emmanchée sur la bague intérieure, les 2P nervures sont fixées entre la bague intérieure et la bague extérieure, les 2P nervures sont prévues à des espacements le long de la direction circonférentielle du manchon de fixation, et toutes les deux nervures adjacentes, la bague intérieure, et la bague extérieure entourent conjointement la rainure de réception.

8. Rotor selon la revendication 7, dans lequel chaque nervure comprend une tige de positionnement (3162) et une nervure de limitation (3164) qui fait saillie à partir d'une surface latérale de la tige de positionnement qui fait face à la rainure de réception, et la nervure de limitation est configurée pour limiter une position du composant composite de concentration de champ magnétique.

9. Rotor selon la revendication 8, dans lequel chaque composant de concentration de champ magnétique composite est pourvu d'une rainure de limitation, et la nervure de limitation est logée dans la rainure de limitation.

10. Rotor selon l'une quelconque des revendications 1 à 9, dans lequel le manchon de fixation est pourvu d'un canal de refroidissement (318) pour faire circuler un fluide de refroidissement.

11. Moteur de type disque (100), comprenant deux stators (10), le rotor selon l'une quelconque des revendications 1 à 10, un arbre rotatif (50), et un boîtier (70), dans lequel le rotor est situé entre les deux stators le long d'une direction axiale du moteur de type disque, l'arbre rotatif pénètre dans les deux stators et le rotor, l'arbre rotatif est relié au rotor pour tourner avec le rotor, et le boîtier est manchonné sur les deux stators, le rotor, et l'arbre rotatif.

12. Système motorisé (1003), comprenant le moteur de type disque selon la revendication 11, un dispositif de commande, et une batterie (400), dans lequel le dispositif de commande est connecté électriquement au moteur de type disque, et la batterie est connectée électriquement au moteur de type disque.

13. Véhicule (1000), comprenant le système motorisé selon la revendication 12 et un châssis, dans lequel le système motorisé est monté sur le châssis.
